(19) **Europäisches Patentamt / European Patent Office / Office européen des brevets**

(11) **EP 3 981 897 B1**

(12) **EUROPEAN PATENT SPECIFICATION**

(45) Date of publication and mention
of the grant of the patent:
**12.07.2023 Bulletin 2023/28**

(21) Application number: **21201249.6**

(22) Date of filing: **06.10.2021**

(51) International Patent Classification (IPC):
**C25B 1/04** $^{(2021.01)}$    **C25B 9/17** $^{(2021.01)}$
**C25B 11/02** $^{(2021.01)}$    **C25B 9/60** $^{(2021.01)}$
**C25B 9/63** $^{(2021.01)}$    **C25B 11/042** $^{(2021.01)}$

(52) Cooperative Patent Classification (CPC):
**C25B 1/04; C25B 9/17; C25B 9/60; C25B 9/63;**
**C25B 11/02; C25B 11/042;** Y02E 60/36;
Y02P 20/133

(54) **ELECTROLYSER FOR THE PRODUCTION OF ELECTROLYTIC HYDROGEN**

ELEKTROLYSEUR ZUR HERSTELLUNG VON ELEKTROLYTISCHEM WASSERSTOFF

ÉLECTROLYSEUR POUR LA PRODUCTION D'HYDROGÈNE ÉLECTROLYTIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.10.2020 IT 202000023512**

(43) Date of publication of application:
**13.04.2022 Bulletin 2022/15**

(73) Proprietor: **Geidoc S.r.l.**
**00187 Roma (RM) (IT)**

(72) Inventor: **CANCELLIERI, Franco**
**00144 Roma (RM) (IT)**

(74) Representative: **Santi, Filippo et al**
**Barzanò & Zanardo Roma S.p.A.**
**Via Piemonte 26**
**00187 Roma (IT)**

(56) References cited:
WO-A2-2008/146188    CN-B- 106 148 991
US-A- 4 107 008    US-A- 4 747 925
US-A1- 2012 217 155

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to an electrolyser for the production of electrolytic hydrogen, that is to say, produced by hydrolysis.

As is known, hydrogen is considered one of the most promising energy carriers for the near future. However, hydrogen is not found free in nature.

The main method adopted for the production of free hydrogen consists in obtaining it starting from fossil fuels with various processes (such as steam reforming, dry reforming, etc.), with consequent environmental pollution due to the emission of high quantities of $CO_2$.

The field of the invention is on the other hand that of the electrolysis of distilled water starting from an electric source. Water electrolysis is, in fact, an electrolytic process in which the passage of electric current causes the breakdown of water molecules into oxygen and gaseous hydrogen. For this reason, the hydrogen is available without depending on oil and other forms of energy related to it.

The electrolytic cell is generally composed of two electrodes, a cathode and an anode, made of inert metal, immersed in an electrolytic solution and connected to a direct current source.

During the passage of electric current inside the electrolytic cell, the electric current itself dissociates the water molecule into the $H^+$ and $OH^-$ ions.

At the cathode, the hydrogen ions ($H^+$) therefore acquire electrons in a reduction reaction which leads to the formation of hydrogen gas:

$$2H^+ + 2e \rightarrow H_2(g)$$

At the anode, on the other hand, the hydroxide ions ($OH^-$) undergo oxidation, yielding electrons:

$$2(OH)^- - 2e \rightarrow 2(OH) \rightarrow H_2O(l) + \frac{1}{2} O_2(g)$$

Hydrogen is therefore produced at the cathode (negative pole of the electrolytic cell), while the oxygen is produced at the anode (positive pole of the electrolytic cell).

A volume of hydrogen will therefore be formed which is almost twice that of the final oxygen volume, since according to the law of ideal gases the number of moles and the volume are in direct proportionality and an equal number of $H^+$ and $OH^-$ ions must be reduced/oxidized at the electrodes.

The process thus described requires an external electric potential, and therefore external electric energy, to allow the passage of current necessary for electrolysis.

It should also be noted that the overall electrolysis reaction of water

$$2\ H_2O\ (l) \rightarrow 2\ H_2\ (g) + O_2\ (g),$$

(where (l) and (g) indicate the liquid and gaseous state of the molecules respectively), when it occurs at a temperature of 298K and at a pressure of 1 bar (100000 Pa), it is characterised by the following thermodynamic data: $\Delta H° = 571$ kJ/mol, $\Delta S° = 325$ J/mol/K, and $\Delta G° = \Delta H° - T\Delta S° = 474$ kJ/mol, where $\Delta G°$ is the Gibbs free energy change; $\Delta H°$ is the change in enthalpy; T is the absolute temperature; and $\Delta S°$ is the change in entropy.

The reaction, therefore, is not spontaneous under standard conditions of temperature and pressure and can only be done by supplying energy as electrical work in an electrochemical reactor.

In the known art, various solutions have been provided for carrying out the electrolytic process just described.

In particular, in the Hoffmann voltmeter there are three vertical cylinders, a central cylinder and two side cylinders, arranged in a row next to each other and in fluid connection with each other, in which the central cylinder is usually open at the top for the water inlet and the side cylinders comprise a respective electrode, each electrode being connected to one end of a power supply unit.

The current leaves the power supply unit and flows from one side cylinder to the opposite side cylinder thanks to the liquid inside.

As a consequence of the passage of this current, a phenomenon of effervescence is noted, that is, the formation of gas bubbles at the base of the two side cylinders, at the electrodes, which indicates the fact that the water is splitting into the two constituent gases, hydrogen and oxygen. Since they are light, the gases accumulate in the upper part of the respective cylinders and as the electric potential energy increases, a corresponding increase in the quantity of gases developed is noted.

Under ideal conditions, it can be seen that the amount of hydrogen is approximately twice that of the oxygen, as the liquid level in the cylinders drops differently due to the pressure of the gas contained in the upper part.

A further prior art solution for the electrolysis of water is the so-called electrolyser.

The prior art electrolysers also comprise a cathode, at which the formation of molecular hydrogen $H_2$ takes place, and an anode, at which the formation of molecular oxygen $O_2$ takes place. A solution containing a support electrolyte is interposed between the cathode and the anode, which ensures the transport of electric charges in ionic form in addition to those transported by the ions $H^+$ and $OH^-$, so as to guarantee the correct execution of the reactions at the electrodes.

For this reason, the prior art electrolysers produce hydrogen and oxygen by a direct dissociation from the passage of current in a solution containing a support electrolyte which must ensure the electrical transport in ionic form in addition to the $H^+$ and $OH^-$ and guarantee the correct carrying out of the reactions at the electrodes.

A flow of electrons, moved by an external EMF, reacts at the cathode with water releasing gaseous $O_2$ and ($OH^-$) which can move towards the anode, where the reaction of partial reduction of the hydroxyls to $O_2$ (b) takes place with reformation of water and introduction of electrons into the external circuit.

At the cathode, the hydrogen ions ($H^+$) acquire electrons in a reduction reaction (a) which leads to the formation of hydrogen gas.

At the anode, the hydroxide ions ($OH^-$) undergo oxidation (b), yielding electrons with the production of gaseous oxygen.

This process requires the continuous integration of distilled water and the electrolyte, with variation of the voltage applied to the electrodes to keep the flow of ions constant.

There is also a heating of the aqueous solution with the electrolyte, due to the energy dispersed due to the deviation from the unitary value of the efficiency of the reactions.

From the kinetic point of view, the dissociation of the water, like any electrochemical process, is the sum of a series of sequential processes that require energy to take place.

Whilst in an open circuit an electrochemical cell has an electromotive force equal to the difference in free energy of the sum of the reactions that take place, when an external current is applied there are no longer equilibrium conditions and modifications occur in the vicinity of the electrode: this phenomenon is called polarisation.

When current passes through an interface, the potential difference that is generated is different from what one would expect from the Nernst equation. This quantity, called, overvoltage $\eta$, is defined as the difference between the potential under operating conditions (E) and the potential under equilibrium conditions ($E_{rev}$):

$$\eta = E - E_{rev}$$

From the kinetic point of view, an overvoltage must be applied to the cell capable of compensating for the sum of these polarizations in order for electrolysis to take place.

As already discussed, an energy of at least 286 kJ/mol is therefore required to split water into its elements.

In order to force the electrons to perform a non-spontaneous redox reaction it is in fact necessary to spend electrical work in a conductor of the second kind (electrolytic solution) which follows Ohm's law (E = RI), where I indicates the current flowing in the electrolyser, with R the resistance of the electrolyte.

This electrical work is proportional to the potential difference applied to the electrolyser (DDP)

The DDP is a function of the electrolyte resistance and the electromotive force (EMF) of the self-generated cell for the polarisation of the electrodes.

Only when the applied DDP exceeds the EMF of the self-generated cell does the passage of current occur and the electrolytic process correlated with this passage will be that much greater as the voltage applied to the electrodes and that much lower as the ohmic resistance of the electrolyte.

Finally, it should be noted that, if electrical energy is supplied to a system composed of various substances which are capable of oxidizing or reducing, the processes that require less energy will take place first, and, once these are exhausted, the less reactive ones will take place.

According to the prior art, in order to prevent contact and recombination of the gases formed at the two electrodes, it is necessary to divide the solution into two separate compartments by means of a suitable diaphragm or membrane.

The performance of an electrolyser depends precisely on the kinetics and the passage of electrons from a conductor of the first kind, which as such follows Ohm's law, to one of the second kind and vice versa.

In fact, if the kinetics of the thermodynamically most favoured product became particularly slow for some reason, it could happen that another product with faster reactions runs out sooner, thus creating a kinetic obstacle which, in order to be overcome, will require an increase in the voltage at the ends of the electrodes (overvoltage).

The series of possible kinetic obstacles is therefore known as overvoltage.

According to patent document CN106148991 B, permanent magnets are arranged outside the body of the electrolytic chamber, in order to generate a magnetic field that maintains the ions generated at the respective electrodes, without the need to divide the electrolytic chamber with a membrane.

Electrolysers in which an electromagnetic field is induced, with or without the presence of a membrane to divide the electrolytic chamber, are also described in patent documents WO2008/146188A2, US4747925A, US4107008A, US2012/217155A1.

The aim of the invention is therefore to overcome the drawbacks of the prior art.

In particular, an aim of the invention is to provide an electrolyser for the production of electrolytic hydrogen which is more efficient than the prior art.

A further aim of the invention is that this electrolyser is simple, safe and reliable.

An aim of the invention is also that this electrolyser is economically advantageous with respect to the prior art systems.

Finally, an aim of the invention is to have a lower heating of the aqueous solution with respect to the prior art systems.

The specific object of the invention is therefore an electrolyser as defined in claim 1, comprising an electrolytic cell which comprises:

- a case which forms an electrolytic chamber, arranged in the centre of said case;
- a first electrode or anode, arranged on a first side of said case;
- a second electrode or cathode, arranged on a second side of said case, opposite to said first side;
- a first magnetic field generator, arranged between said cathode and said electrolytic chamber;
- a second magnetic field generator, arranged between said anode and said electrolytic chamber, with inverse magnetic field orientation with respect to said first magnetic field generator; and
- a current generator for feeding said magnetic field generators and for regulating the voltage at the ends of said anode and of said cathode.

Further preferred features and aspects of the electrolyser according to the present invention are defined in the subsequent dependent claims.

The invention is now described, by way of example and without limiting the scope of the invention, according to its preferred embodiments, with particular reference to the accompanying drawings, in which:

Figure 1 shows a front view of a prior art system for the production of electrolytic hydrogen;

Figure 2A shows a longitudinal section view designated BB, complete with the schematic representation of the hydrogen and oxygen tanks, of a system for the production of electrolytic hydrogen according to the invention;

Figure 2B shows a view from the longitudinal section designated BB of a part of the system for the production of electrolytic hydrogen of Figure 2A, including the indication of a plane AA;

Figure 2C shows a view from the plane AA of the system for the production of electrolytic hydrogen of Figure 2B;

Figure 2D shows a top view of the system for the production of electrolytic hydrogen of Figure 2A;

Figure 3A shows the system for the production of electrolytic hydrogen of Figure 2A with the schematic addition of the connections between the fluid containers with the cell and of the cell with the gas tanks, further clarifying the embodiment of a system for the production of electrolytic hydrogen according to the invention;

Figure 3B shows in greater detail some details of the system for the production of electrolytic hydrogen of Figure 2B;

Figures 3C, 3D and 4A show in greater detail some details of the system for the production of electrolytic hydrogen of Figures 2C, 2D and 3B;

Figure 4B shows a horizontal longitudinal view from section XX of the system for the production of electrolytic hydrogen of Figure 4A to highlight the perforated and bent disks that make up the electrodes;

Figure 4C shows a view of the section AA of the system for the production of electrolytic hydrogen of figure 4A; and

Figure 5 shows a flow diagram of a method for operating a system for the production of electrolytic hydrogen according to the invention.

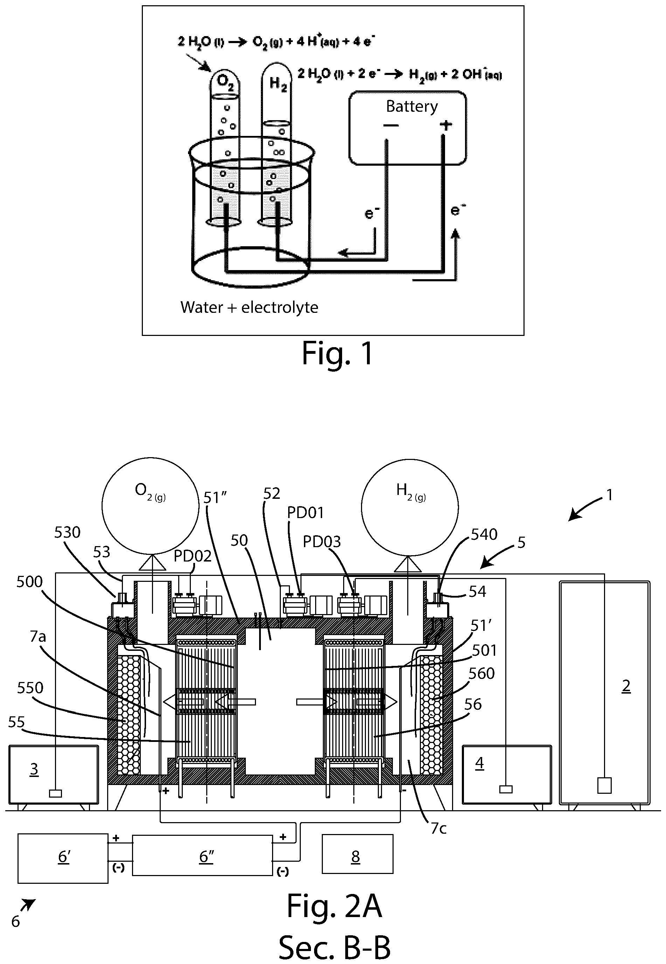

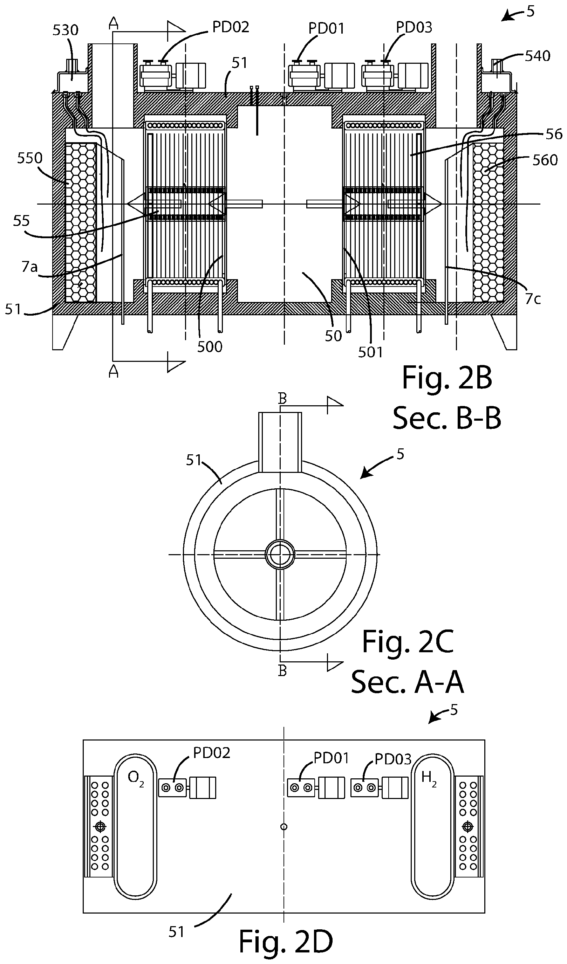

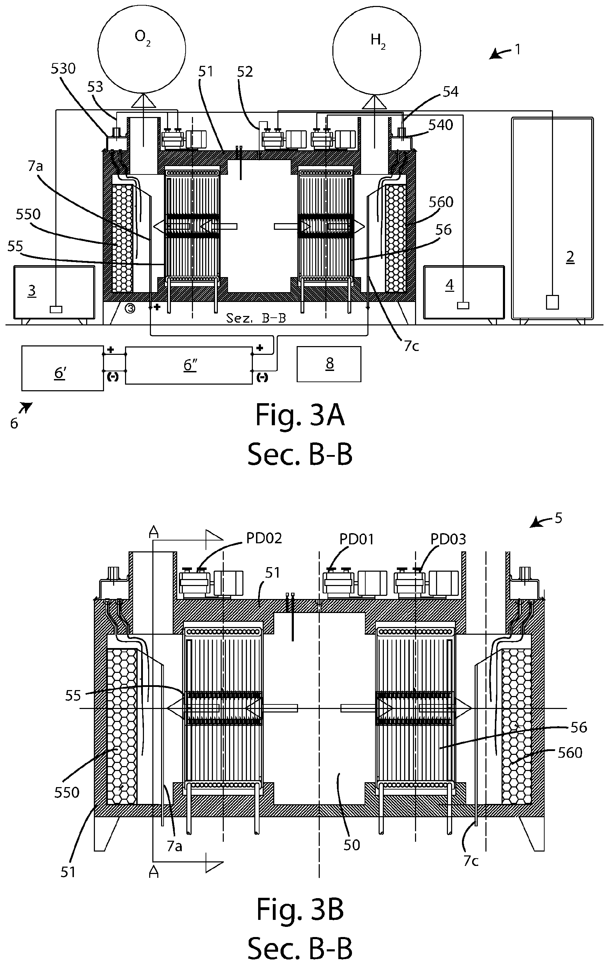

With particular reference to Figures 2 - 4, a system 1 or electrolyser 1 according to the invention comprises:

- a first container 2, containing distilled water;
- a second container 3, containing a solution with a strong acid, in particular a solution of hydrochloric acid HCl, also called muriatic acid;
- a third container 4, containing a solution with a weak base, in particular a solution of ammonia, $NH_3$, or a solution of ammonium hydroxide;
- an electrolytic cell 5, comprising

an electrolytic chamber 50, comprising a first inlet 52, a second inlet 53 and a third inlet 54 respectively connected to said first container 2, to said second container 3 and to said third container 4,
a first electrode, or anode, 7a arranged at a linear-step magnetic field generator 55, and a second electrode, or cathode, 7c arranged at a linear-step magnetic field generator 56;

- at least one voltage generator 6 or current generator 6, in particular a voltage generator powered by renewable sources, such as solar energy, wind energy, geothermal energy, etc., connected to said electrodes 7a, 7c, to generate a potential difference between anode 7a and cathode 7c; and
- two linear-step magnetic field generators 55 and 56, arranged respectively in correspondence with said electrodes 7a, 7c and powered in parallel to each of said electrodes 7a, 7c by the same voltage generator 6.

In particular, as regards the introduction of fluids into the electrolytic chamber 50, the first inlet 52 is preferably arranged centrally with respect to it.

On the other hand, the second inlet 53 is arranged at a first side 500 of said electrolytic chamber 50, whilst the third inlet 54 is arranged at a second side 501 of said electrolytic chamber 50, opposite to said first side.

Said third inlet 54 is also connected to said second container 3, for the reasons better illustrated below.

The second inlet 53 can comprise a muriatic acid diffuser 530, in particular a diffuser 530 made with alumina ceramic tubes ($Al_2O_3$), to prevent the acid from entering the electrolytic chamber 50 with too high concentrations, so as to ruin the chamber electrolytic 50 and the other elements of the electrolyser 1.

Moreover, the first electrode 7a, or anode 7a, is arranged at said first side 500, and therefore of said second inlet 53, and the second electrode 7c, or cathode 7c, is arranged at said second side 501 of said electrolytic chamber 50, and therefore of said third inlet 54.

In order to improve the efficiency of the electrolyser 1, particular "vectorizers-accelerators" have been provided, as described below.

The connection between the containers 2, 3, 4 and the respective inlets 52, 53, 54 can be regulated by regulating valves and dosing pumps, in particular peristaltic dosing pumps PD01, PD02, PD03.

Moreover, an electronic regulator 8 can be provided connected to the three inlets 52, 53, 54 by means of suitable dosing pumps to maintain the design flows of the chemical reagents through said inlets 52, 53, 54.

The voltage generator 6 is, as mentioned, preferably a generator 6' with photovoltaic and wind energy or other renewable energy, associated with a direct current generator with electronic control 6".

According to an alternative embodiment, two distinct voltage generators may be present, respectively for powering the electrodes 7a, 7c and for powering the linear-step magnetic field generators 55 and 56.

The linear-step magnetic field generators 55 and 56 are finally arranged, one opposite to the other, at the respective electrodes 7a, 7c.

In particular, each linear-step magnetic field generator 55 and 56 comprises a cross-linked polyethylene cylinder, which incorporates a copper solenoid for the induction of a constant magnetic field on a coaxial cylinder with alternating magnetic and diamagnetic aluminium rings, for directing and improving the electrolytic activity at the points where the reagents contained in said second container 3 and in said third container 4 (that is, weak bases, for example ammonia, and strong acids, for example muriatic acid) are introduced.

Thanks to the presence of the linear-step magnetic field generators 55 and 56, the main reactions for the production of hydrogen and oxygen are confined to the electrodes 7a, 7c themselves.

In fact, advantageously, thanks to the presence of the linear-step magnetic field generators 55 and 56, there is no need to physically separate the two portions of the electrolytic chamber 50 in which the chemical reactions take place, since once the potential difference has been applied between the electrodes by means of said voltage generator 6 and once the linear-step magnetic field generators 55 and 56 are powered with low current, the latter generate two respective linear-step magnetic fields with opposite magnetic orientation to each other, which direct the ions respectively to the cathode 7c and to the anode 7a, so as to favour the reactions whereby the anode 7a absorbs the electrons of the solution, charging itself negatively, while the cathode 7c transfers the electrons to the solution, charging positively.

In particular, the magnetic field generators 55 and 56, which generate a linear-step magnetic field in the vicinity of the electrodes 7a, 7c, allow an ordered and directed flow of charges to be obtained, thus reducing or even eliminating the kinetic obstacles described for the prior art.

An example of the electrolyser 1 according to the invention can therefore comprise:

a first container 2, or distilled water container;
a second container 3, or muriatic acid container, containing a liquid solution of between 15% and 40%, preferably equal to 33%, of hydrochloric acid in wa+ter;
a third container 4, or ammonium hydroxide container, containing a solution of $NH_3$ in water, preferably of commercial liquid ammonia with 26 degrees Baumé;
an electrolytic cell 5, for the electrolysis of water into gaseous hydrogen;

a pair of linear-step magnetic field generators 55 and 56.

In particular, each linear-step magnetic field generator 55 or 56 can comprise a cylinder, in particular a cross-linked polyethylene cylinder, and a copper solenoid, arranged inside said cylinder, for the induction of a constant magnetic field on a coaxial cylinder with alternating magnetic and diamagnetic aluminium rings, to direct, in opposite directions, and improve the electrolytic activity at the electrodes 7a, 7c, in particular at the anode 7a and cathode 7c respectively, by vectoring the ions.

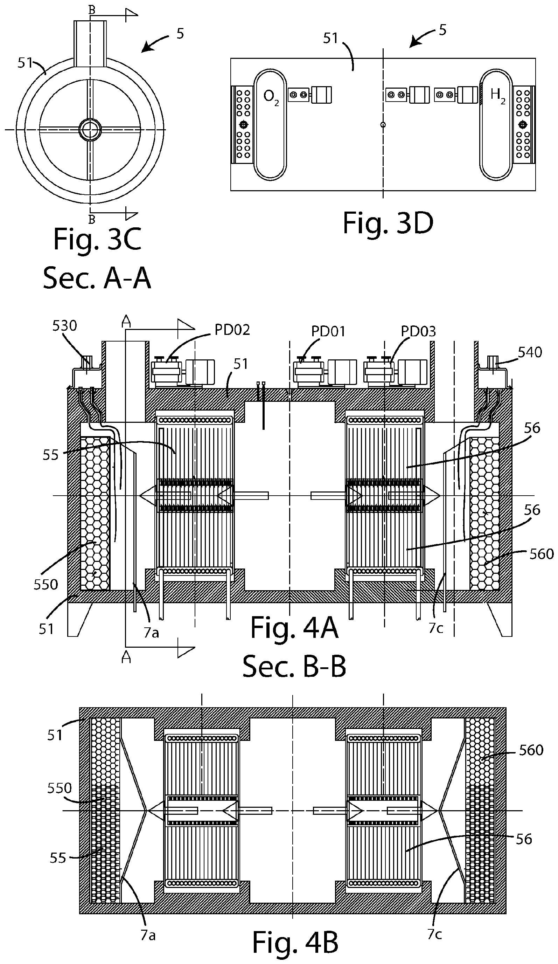

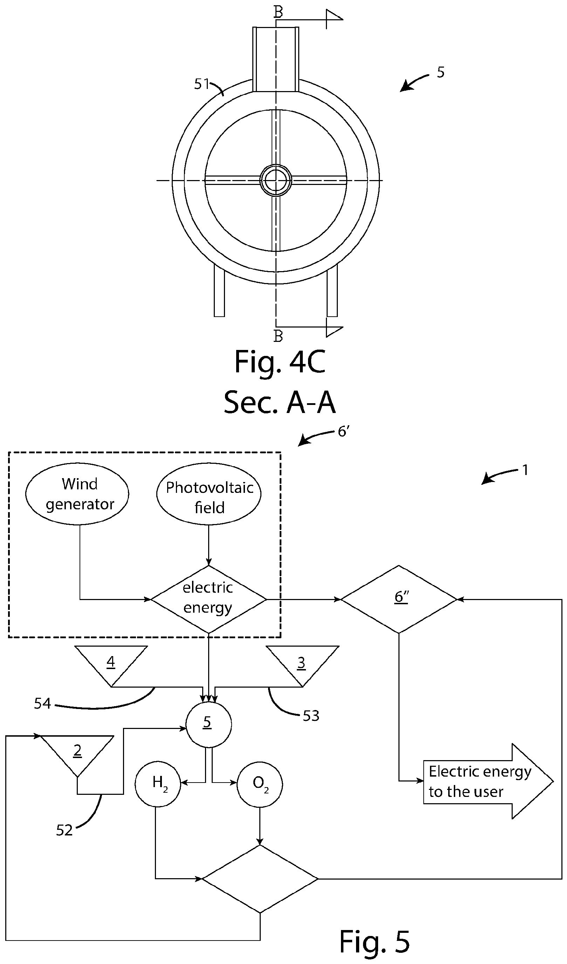

The cathode 7c is preferably a disk, in particular a disk made of Nickel, a ferromagnetic material, suitably perforated and "V" bent as shown in Figure 4B. Preferably, this disk is mounted on a support 560, made of porous ceramic material.

Similarly, the anode 7a is preferably a disk, in particular a disk made of palladium, a non-ferromagnetic material, suitably perforated and "V" bent as shown in Figure 4B. Preferably, this disk is mounted on a support made of porous ceramic material 550.

The operation of the electrolyser 1 just described is shown here.

It is known that a salt is produced by reacting a weak base ($NH_3$ ammonia) with a strong acid (hydrochloric acid HCl), which in this specific case is ammonium chloride $NH_4Cl$, which diluted in water is a high conductivity electrolyte used as a catalyst for the production of hydrogen, as described below.

With particular reference to Figure 5, the operation of the electrolyser 1 is therefore envisaged with the implementation of the following operating steps:

A) introduction of distilled water contained in the first container 2 into the electrolytic cell 50 of the electrolyser 1, for example by means of dosing pump PD-01;

B) introduction of muriatic acid contained in the second container 3 to the anode 7a through said second inlet 53, for example by means of dosing pump PD-02, and to the cathode 7c, together with commercial ammonia, for the production of ammonium chloride (NH4Cl), as illustrated below;

C) introduction of ammonia contained in the third container 4 to the cathode 7c through said third inlet 54, for example by means of dosing pump PD-03;

D) action of an electronic regulator on the three inlets 52, 53, 54 by means of suitable dosing pumps to maintain the design flows for the following reactions:

$$NH_3 + HCl + 2H_2O \rightarrow H_3O^+ + Cl^- + NH_4^+ + (OH)^- \rightarrow NH_4Cl + 2H_2O.$$

By way of example, a 100 gram solution composed of 40.25% water with 40.73% hydrochloric acid and 19.02% ammonia will produce 59.752 grams of ammonium chloride ($NH_4Cl$) and 40.248 grams of water.

Ammonium chloride (also known as ammonium salt, $NH_4Cl$) is the ammonium salt of hydrochloric acid, a known high conductivity electrolyte.

At the cathode 7c and inside the electrolytic cell 5, for the introduction of the aqueous ammonia solution, further ammonium hydroxide, or ammonium hydrate, will be formed, which is an unstable chemical compound having molecular formula $NH_4OH$, existing only in aqueous solutions of ammonia.

It has been measured that a solution 1M of $NH_3$ contains just 0.42% of $NH_4OH$ and has a pH of 11.63.

Ammonia is, in fact, a weak base, having Kb = $1.8 \cdot 10^{-5}$ ions.

The ammonium hydroxide exists only in its dissociated form which occurs by reacting ammonia with water:

$$NH_3 + H(OH) \rightarrow NH_4^+ + (OH)^- = NH_4OH$$

having the following parameters:

molar mass: 35.04 g/mol;
density: 880 kg/m$^3$;
boiling point: 24.7°C;
melting point: -91.5 °C; and
brute or molecular formula: $NH_4OH$.

It will therefore be the first $NH_4^+$ ion to react with the water, hydrolysing it to reform the ammonium hydroxide leaving an excess of $H^+$ ions in solution.

As indicated below, the hydrogen ions will acquire electrons from the cathode to form $(H_2)^\uparrow$(g) (that is, hydrogen gas).

With particular reference to Figures 2-4, the electrolytic cell 5 can comprise:

a case 51 with a circular section composed of two cross-linked polyethylene shells, which can be coupled together with gaskets and screws, said case forming said electrolytic chamber 50 comprising said first inlet 52, arranged at its centre, said second inlet 53 and said third inlet 54;

said first electrode 7a, or anode 7a, made with a perforated and "V" bent disk of Nickel or Palladium, mounted on a support made of porous ceramic material;

said second electrode 7c, or cathode 7c, made with a perforated and "V" bent nickel disk mounted on a support made of porous ceramic material;

a first magnetic field generator 56 at the cathode, consisting of a cross-linked polyethylene cylinder which incorporates a copper solenoid for inducing a magnetic field on a coaxial cylinder with alternating magnetic and diamagnetic aluminium rings;

a second magnetic field generator 55 at the anode, identical to the first generator 56, but with an inverted orientation;

an electronic regulator 8, for regulating the flows through said inlets 52, 53, 54;

a first dosing pump PD01, in particular a dosing pump for water, in fluid connection with the first water container 2 and with said first inlet 52 of the electrolytic cell 50, for introducing the distilled water at its centre;

a second dosing pump PD02, in particular a dosing pump PD02 for hydrochloric acid, in fluid connection with the second container 3 of hydrochloric acid and with the anode 7a, through said second inlet 53, and with the cathode 7c, through said third inlet 54, for the introduction of hydrochloric acid at said anode 7a, and, to a lesser extent, at said cathode 7c;

a third dosing pump PD03, in particular a dosing pump for ammonia, in fluid connection with the third container 4 of ammonia and with the cathode 7c of the electrolytic cell 1, through said third inlet 54, for the introduction of ammonia at said cathode 7c, in which said ammonia is mixed with the hydrochloric acid;

a first current generator, in particular a constant current generator for supplying the solenoids of the linear-step magnetic field generators 55 and 56; and a second current generator 6, preferably consisting of a generator 6' with photovoltaic and wind energy or other renewable energy, associated with a direct current generator with electronic control 6", for regulating the voltage at the ends of the electrodes 7a, 7c according to the dosages for the production of hydrogen in the predetermined quantities implemented with the adjustment means, connected respectively to said first dosing pump PD01, to said second dosing pump PD02 and to said third dosing pump PD03, to regulate the flow inlet of the respective liquids inside the electrolytic cell 50 directly or through the cathode 7c and the anode 7a.

As mentioned, the electrodes 7a, 7c are preferably coupled to a support made of spongy ceramic material.

In particular, at the cathode 7c, this support can be a porous support made of aluminium oxide $Al_2O_3$, or alumina, with a honeycomb structure. In this way, advantageously, the cathode 7c will have a large surface resistant to corrosion and connected to the electrical source for the emission of electrons. Similarly, at the anode 7a a support can be provided made of porous ceramic material, aluminium oxide $Al_2O_3$, or alumina, with a honeycomb structure.

At the cathode 7c a seat connected to said diffuser 540 may also be provided, wherein said diffuser 540 is in fluid connection with said third dosing pump PD02, to facilitate the diffuse entry of the muriatic acid into the electrolytic cell in order to limit its corrosive power. In particular, the diffuser 540 may comprise a plurality of polyethylene pipes arranged as shown for example in Figures 2A, 2B, 3A, 3B, 4A.

Similarly, a respective seat connected to a diffuser 540 can be provided at the anode 7a, wherein said diffuser 540 is in fluid connection with said second dosing pump PD02, to facilitate the diffuse entry of ammonia $NH_3$ mixed with hydrochloric acid HCl inside the electrolytic cell 5. In particular, the diffuser 540 may comprise a plurality of alumina ceramic tubes $Al_2O_3$, as shown for example in Figures 2A, 2B, 3A, 3B, 4A.

The materials used in the respective anode and cathode diffusers have in fact been chosen to prevent their corrosion.

As mentioned, the voltage generator 6 for the operation of the electrolyser 1 is powered by renewable sources, such as solar energy, wind energy, geothermal energy, hydroelectricity, etc.

During use, the voltage generator 6 applies a potential difference to the electrodes 7a, 7c to make a current flow from the cathode 7c towards the anode 7a, thanks to the vectorized electrolytic solution by means of said magnetic generators 55 and 56 to the catalyst liquid (ammonium chloride - NH4Cl), which splits the water in the two constituent gases, hydrogen (reaction at cathode 7c) and oxygen (reaction at anode 7a)

The hydrogen appears at cathode 7c (the negatively charged electrode from which the electrons are introduced into the electrolyte), while oxygen develops at anode 7a (the positively charged electrode, where the electrons from the electrolyte are absorbed). Since they are light, the gases accumulate in the upper part of the electrolyser 1; as the voltage applied to the electrodes 7a, 7c and to the linear magnetic generators 55 and 56 increases, there is a corresponding increase in the quantity of gases developed.

Under ideal conditions, the amount of hydrogen is approximately twice that of the oxygen.

The minimum voltage needed by the electrolytic cell 5 for electrolysis to take place is related to the Gibbs free energy by the following equation:

$$E_{rev} = \frac{\Delta G}{nF}$$

Where ΔG is Gibbs free energy
n: the amount of electrons involved in the reactions
F: Faraday constant

Under standard conditions with ΔG = 23.7178 kJ/mol the equilibrium voltage is: E_rev = -1.229V for electrolysis of the water and $E_{rev}$=-1.330V for co-electrolysis.

For this reason, the reaction that leads to the formation of gaseous hydrogen $H_2$ can continue as long as reagents are available, as the electric current will continue to flow inside the electrolytic cell 5, and indeed will find an increasingly lower resistance thanks to the presence of ammonium chloride $NH_4Cl$.

The following reactions will therefore take place within the system just described:

$$NH_3 + HCl + 2H_2O \rightarrow H_3O^+ + Cl^- + NH_4^+ + (OH)^- \rightarrow NH_4Cl + 2H_2O,$$

wherein said regulating means will be configured to regulate the respective flows in such a way as to guarantee the quantities of reactants necessary for such reactions.

In particular, as mentioned, ammonia will be introduced at the cathode for the formation of gaseous hydrogen $H_2$, indicated with the symbol $(H_2)^\uparrow$(g), and ammonium hydroxide $NH_4OH$, according to the reactions

$$2NH_4^+ + 2H^+ + 2(OH)^- + 2e \rightarrow 2NH_4OH + H_2^\uparrow(g),$$

wherein

$$2H^+ + 2(OH)^- + 2e \rightarrow 2(OH)^- + H_2^\uparrow(g),$$

$$2NH_4^+ + 4H^+ + 4(OH)^- + 4e \rightarrow 2NH_4OH + 2(OH)^- + 2H_2^\uparrow(g).$$

It will therefore be the first $NH_4^+$ ion to react with water, hydrolysing it, to reform the ammonium hydroxide and leave an excess of $H^+$ ions in solution, which will acquire electrons e^ - from the cathode to form $(H_2)^\uparrow$(g).

Simultaneously with the formation of gaseous hydrogen $(H_2)^\uparrow$(g) and ammonium hydroxide $NH_4OH$ at the cathode 7c, HCl will be introduced at the anode 7a for the formation of gaseous oxygen $O_2$ and ammonium chloride $NH_4Cl$, according to the following oxidation reaction, which uses ions $(OH-)$ coming from the cathode:

$$NH_3 + HCl + H_2O + 2(OH)^- - 2e \rightarrow 2H_2O + NH_4Cl + \frac{1}{2}O_2^\uparrow(g),$$

wherein

$$2(OH)^- - 2e \rightarrow H_2O + \frac{1}{2}O_2^\uparrow(g),$$

and

$$NH_3 + HCl + H_2O + 4(OH)^- - 4e \rightarrow 3H_2O + NH_4Cl + O_2^\uparrow(g).$$

Moreover, the $NH_3$ solution contained in the ammonia container will preferably be a solution of ammonia in water with 30% by weight of $NH_3$ (equal to 26° Baumé, measured at a temperature of about 15.5 °C), since it is more easily available from a commercial point of view. In fact, industrial ammonia is marketed as ammonia liquor, usually having 30% by weight of ammonia in water, or in compressed form or chilled anhydrous liquid ammonia, transported in tankers or cylinders. Such preferred forms for the transport of the $NH_3$ are due to the fact that the $NH_3$, when not in solution, passes into the gaseous phase at -33.34°C at atmospheric pressure. For this reason, the $NH_3$ liquid must be stored under pressure or at very low temperatures.

Similarly, the hydrochloric acid solution is preferably an aqueous solution at 33% by weight of HCl in water, having a density of about 1.186 g/mL, since it is readily available from the commercial point of view.

If the system according to the invention was powered exclusively by solar energy such as photovoltaic and/or wind for example, and the electrolytic hydrogen was stored in special tanks, there would be the great advantage of accumulating renewable energy to make it available when required in the form of gaseous hydrogen to produce electricity with a PEM cell, even in the absence of the sun and wind.

As regards the efficiency of the system 1 just described, it is believed that the splitting (with efficiency = 70%) of a litre of water with a support electrolyte at high speed, such as ammonium chloride ($NH_4Cl$), which can be obtained by reacting a weak base ($NH_3$ ammonia) with a strong acid (HCl hydrochloric acid) in its components $H_2$ and $O_2$, and with the vectorization of the ions by means of the linear-step magnetic field generators 55 and 56 requires about 6.3 kWh of electrical energy.

The energy content of the hydrogen thus produced (approximately 1.36 $m^3$ at atmospheric pressure) corresponds approximately to 4.41 kWh of chemical energy.

In order to again obtain electricity from 1.36 $m^3$ of hydrogen, with the use of a combined cycle (such as the gas turbine and steam turbine), about 2.2 kWh of electricity would be obtained, whilst with a normal fuel cell approximately 3.3 kWh would be obtained, that is 52.2% of the renewable energy spent (6.3 kWh), at almost zero cost.

The electrolyser 1 according to the invention described above will therefore be able to feed highly efficient hydrogen formation processes, which are convenient both from an environmental and a commercial point of view.

As already mentioned, the high efficiency is obtained thanks to the improvement of the processes at the poles of the electrolyser and with the reduction of the ohmic resistance of the electrolyte.

Moreover, the most reliable market estimates foresee that by resorting to energy from renewable sources, increasing the efficiency of the electrolysers 1 with the most favourable ratio between the energy produced and the cost of the system, the future production of pure electrolytic hydrogen will be able to cover at least the 50% of world demand.

If then, in order to reduce environmental pollution, the production of $CO_2$ is taxed, the electrolytic hydrogen produced with the electrolyser 1 according to the invention will be able to cover the total world demand.

For example, the hydroelectric source of energy for large hydrogen productions together with high efficiency electrolysers 1 will allow the production cost of electrolytic hydrogen to be minimised; whilst for small and medium-sized productions of electrolytic hydrogen the location of the site and the relative historical characteristics of the solar radiation and wind will make the use of photovoltaic or wind energy systems or both in hybrid mode more favourable or not, to be associated with the electrolyser 1 according to the invention, for the production of electrolytic hydrogen.

Finally, it is necessary to highlight the excellent flexibility of use that occurs with the production of electrolytic hydrogen at medium temperature from renewable sources with the electrolyser 1.

In fact, these productions, and their accumulation, allow the most to be made of the solar radiation and/or wind, to transfer the electricity that can be produced with them (with a PEM for example) in a constant manner, to the extent necessary to power the loads in the hours of absence of the sun and wind and in making isolated sites such as radio and/or mobile radio stations autonomous.

Preferred embodiments and suggested variants of this invention have been described herein, but it is to be understood that experts in the field may make modifications and changes without departing from the scope of protection as defined by the appended claims.

**Claims**

1. An electrolyser (1) comprising an electrolytic cell (5), **characterised in that** said electrolytic cell (5) comprises:

   - a case (51) which forms an electrolytic chamber (50), arranged at the centre of said case (51);
   - a first electrode or anode (7a), arranged on a first side of said case (51);
   - a second electrode or cathode (7c), arranged on a second side of said case (51), opposite to said first side;
   - a first magnetic field generator (56), arranged between said cathode (7c) and said electrolytic chamber (50);
   - a second magnetic field generator (55), arranged between said anode (7a) and said electrolytic chamber (50), with inverse magnetic field orientation with respect to said first magnetic field generator (56); and

- a current generator for feeding said magnetic field generators and for regulating the voltage at the ends of said anode (7a) and of said cathode (7c).

2. The electrolyser (1) according to claim 1, **characterised in that** said electrolytic chamber (50) comprises a first inlet (52) in fluid connection with a water dosing pump (PD01), a second inlet (53) in fluid connection with a hydrochloric acid dosing pump (PD02), and a third inlet (54) in fluid connection with an ammonia dosing pump (PD03) and with said hydrochloric acid dosing pump (PD02), said electrolyser (1), said dosing pumps (PD01, PD02 and PD03) being driven by an electronic regulator (8).

3. The electrolyser (1) according to claim 1 or 2, **characterised in that** said magnetic field generators (55, 56) are linear-step magnetic field generators.

4. The electrolyser (1) according to any one of the preceding claims, **characterised in that** said case (51) is made of cross-linked polyethylene.

5. The electrolyser (1) according to any one of the preceding claims, **characterised in that** said anode (7a) is made with a perforated and V-folded disk made of nickel or palladium.

6. The electrolyser (1) according to any one of the preceding claims, **characterised in that** said anode (7a) is mounted on a support made of porous ceramic material.

7. The electrolyser (1) according to claim 6, **characterised in that** said support of porous ceramic material is made of aluminium oxide $Al_2O_3$, or alumina, with a honeycomb structure.

8. The electrolyser (1) according to any one of the preceding claims, **characterised in that** said cathode (7c) is made with a perforated and V-folded disk made of nickel.

9. The electrolyser (1) according to any one of the preceding claims, **characterised in that** said cathode (7c) is mounted on a support made of porous ceramic material.

10. The electrolyser (1) according to claim 9, **characterised in that** said support made of porous ceramic material is made of aluminium oxide $Al_2O_3$, or alumina, with a honeycomb structure.

11. The electrolyser (1) according to any one of the preceding claims, **characterised in that** said first magnetic field generator (56) and said second magnetic field generator (55) are each composed of a cross-linked polyethylene cylinder which incorporates a copper solenoid for the induction of a magnetic field on a coaxial cylinder with alternating magnetic and diamagnetic aluminium rings.

12. The electrolyser (1) according to any one of the preceding claims, **characterised in that** said second inlet (53) comprises a diffuser (530) made of alumina ceramic tubes ($Al_2O_3$).

13. The electrolyser (1) according to any one of the preceding claims, **characterised in that** said third inlet (54) comprises a diffuser (540) made of polyethylene pipes.

14. The electrolyser (1) according to any one of the preceding claims, **characterised in that** said current generator consists of:

    - a first current generator for feeding said magnetic field generators (55, 56); and
    - a second current generator for regulating the voltage at the ends of said anode (7a) and of said cathode (7c).

15. The electrolyser (1) according to any one of the preceding claims, **characterised in that** said current generator is a photovoltaic and wind energy generator (6') or other renewable energy, associated with a direct current generator with electronic control (6").

**Patentansprüche**

1. Ein Elektrolysegerät (1), das eine Elektrolysezelle (5) umfasst, **dadurch gekennzeichnet, dass** die besagte Elektrolysezelle (5) umfasst:

- ein Gehäuse (51), das eine Elektrolytkammer (50) bildet, in der Mitte des besagten Gehäuses (51) angeordnet;
- eine erste Elektrode oder Anode (7a), angeordnet auf einer ersten Seite des besagten Gehäuses (51);
- eine zweite Elektrode oder Kathode (7c), angeordnet auf einer zweiten Seite des besagten Gehäuses (51), gegenüber der besagten ersten Seite;
- einen ersten Magnetfeldgenerator (56), der zwischen der besagten Kathode (7c) und der besagten elektrolytischen Kammer (50) angeordnet ist;
- einen zweiten Magnetfeldgenerator (55), der zwischen der besagten Anode (7a) und der besagten Elektrolytkammer (50) angeordnet ist, mit inverser magnetischer Feldorientierung in Bezug auf den besagten ersten Magnetfeldgenerator (56); und
- einen Stromgenerator zur Speisung der besagten Magnetfeldgeneratoren und zum Regeln der Spannung an den Enden der besagten Anode (7a) und der besagten Kathode (7c).

2. Elektrolysegerät (1) nach Anspruch 1, **dadurch gekennzeichnet, dass** die besagte Elektrolytkammer (50) einen ersten Einlass (52) umfasst, der in flüssiger Verbindung mit einer Wasserdosierpumpe (PD01), einem zweiten Einlass (53) in flüssiger Verbindung mit einer Salzsäure-Dosierpumpe (PD02) und einem dritten Einlass (54) in flüssiger Verbindung mit einer Ammoniak-Dosierpumpe (PD03) und mit besagter Salzsäure-Dosierpumpe (PD02), besagtes Elektrolysegerät (1), besagte Dosier- Pumpen (PD01, PD02 und PD03) werden von einem elektronischen Regler (8) angetrieben.

3. Elektrolysegerät (1) nach Anspruch 1 oder 2, **dadurch gekennzeichnet, dass** in den besagten Magnetfeldgeneratoren (55, 56) sich lineare Schrittmagnetfeld-Generatoren befinden.

4. Elektrolysegerät (1) nach einem der vorstehenden Ansprüche, **dadurch gekennzeichnet, dass** das besagte Gehäuse (51) aus vernetztem Polyethylen besteht.

5. Elektrolysegerät (1) nach einem der vorstehenden Ansprüche, **dadurch gekennzeichnet, dass** die besagte Anode (7a) mit einer perforierten und V-gefalteten Scheibe aus Nickel oder Palladium hergestellt ist.

6. Elektrolysegerät (1) nach einem der vorstehenden Ansprüche, **dadurch gekennzeichnet, dass** die besagte Anode (7a) auf einer Unterlage aus porösem Keramikmaterial montiert ist.

7. Elektrolysegerät (1) nach Anspruch 6, **dadurch gekennzeichnet, dass** der besagte Träger aus porösem Keramikmaterial aus Aluminiumoxid $Al_2O_3$ oder Aluminiumoxid mit Wabenstruktur besteht.

8. Elektrolysegerät (1) nach einem der vorstehenden Ansprüche, **dadurch gekennzeichnet, dass** die besagte Kathode (7c) mit einer perforierten und V-gefalteten Scheibe aus Nickel hergestellt ist.

9. Elektrolysegerät (1) nach einem der vorstehenden Ansprüche, **dadurch gekennzeichnet, dass** die besagte Kathode (7c) auf einer Unterlage aus porösem Keramikmaterial montiert ist.

10. Elektrolysegerät (1) nach Anspruch 9, **dadurch gekennzeichnet, dass** der besagte Träger aus porösem Keramikmaterial aus Aluminiumoxid $Al_2O_3$ oder Aluminiumoxid mit Wabenstruktur besteht.

11. Elektrolysegerät (1) nach einem der vorstehenden Ansprüche, **dadurch gekennzeichnet, dass** der besagte erste Magnetfeldgenerator (56) und der besagte zweite Magnetfeldgenerator (55) jeweils aus einem vernetzten Zylinder aus Polyethylen besteht, der einen Kupfermagneten für die Induktion eines Magnetfeldes auf einem koaxialen Zylinder mit wechselnden magnetischen und diamagnetischen Aluminiumringen eingebaut hat.

12. Elektrolysegerät (1) nach einem der vorstehenden Ansprüche, **dadurch gekennzeichnet, dass** der zweite Einlass (53) einen Diffusor (530) aus Aluminiumoxid-Keramikrohren ($Al_2O_3$) umfasst.

13. Elektrolysegerät (1) nach einem der vorstehenden Ansprüche, **dadurch gekennzeichnet, dass** der besagte dritte Einlass (54) einen Diffusor (540) aus Polyethylenrohren umfasst.

14. Elektrolysegerät (1) nach einem der vorstehenden Ansprüche, **dadurch gekennzeichnet, dass** der besagte Stromgenerator ausfolgendem besteht:

- einen ersten Stromgenerator zur Speisung der besagten Magnetfeldgeneratoren (55, 56); und
- einen zweiten Stromgenerator zur Regelung der Spannung an den Enden der besagten Anode (7a) und der besagten Kathode (7c).

15. Elektrolysegerät (1) nach einem der vorstehenden Ansprüche, **dadurch gekennzeichnet, dass** der besagte Stromgenerator ein photovoltaischer Generator und Windenergiegenerator (6') ist, oder andere erneuerbare Energie, verbunden mit einem Gleichstromgenerator mit elektronischer Steuerung (6").

**Revendications**

1. Un électrolyseur (1) comprenant une cellule électrolytique (5), est **caractérisé par le fait que** la cellule électrolytique (5) comprend:

   - un boîtier (51) qui forme une chambre électrolytique (50), disposée au centre dudit boîtier (51);
   - une première électrode ou une anode (7a), disposée sur un premier côté dudit boîtier (51);
   - une seconde électrode ou cathode (7c), disposée sur un second côté dudit boîtier (51), à l'opposé du premier côté ;
   - un premier générateur de champ magnétique (56), disposé entre ladite cathode (7c) et ladite chambre électrolytique (50);
   - un second générateur de champ magnétique (55), disposé entre ladite anode (7a) et ladite chambre électrolytique (50), avec orientation du champ magnétique inverse par rapport au premier générateur de champ magnétique (56); et
   - un générateur actuel pour alimenter lesdits générateurs de champ magnétique et pour réguler la tension aux extrémités de ladite anode (7a) et de ladite cathode (7c).

2. L'électrolyseur (1) selon la revendication 1, est **caractérisé par le fait que** la chambre électrolytique (50) comprend une première entrée (52) en liaison fluide avec une pompe à eau (PD01), une seconde entrée (53) en liaison fluide avec une pompe de dosage d'acide chlorhydrique (PD02), et une troisième entrée (54) en liaison fluide avec une pompe de dosage à ammoniaque (PD03) et avec ladite pompe de dosage d'acide chlorhydrique (PD02), ledit électrolyseur (1), lesdites pompes de dosage (PD01, PD02 et PD03) étant entraînées par un régulateur électronique (8).

3. L'électrolyseur (1) selon la revendication 1 ou 2, est **caractérisé par le fait que** les générateurs de champ magnétique (55, 56) sont des générateurs de champ magnétique à pas linéaire.

4. L'électrolyseur (1) selon l'une quelconque des revendications précédentes est **caractérisé par le fait que** ledit boîtier (51) est fait de polyéthylène réticulé.

5. L'électrolyseur (1) selon l'une quelconque des revendications précédentes est **caractérisé par le fait que** ladite anode (7a) est faite avec un disque perforé et plié en V fait de nickel et de palladium.

6. L'électrolyseur (1) selon l'une quelconque des revendications précédentes est **caractérisé par le fait que** ladite anode (7a) est montée sur un support fait d'un matériau céramique poreux.

7. L'électrolyseur (1) selon la revendication 6 est **caractérisé par le fait que** ledit support de matériau céramique poreux est fait d'oxyde d'aluminium $Al_2O_3$, ou l'alumine avec une structure en nid d'abeille.

8. L'électrolyseur (1) selon l'une quelconque des revendications précédentes est **caractérisé par le fait que** ladite cathode (7c) est faite d'un disque perforé et plié en V fait de nickel.

9. L'électrolyseur (1) selon l'une quelconque des revendications précédentes, est **caractérisé par le fait que** dans ladite cathode (7c) est monté sur un support de matériau céramique poreux.

10. L'électrolyseur (1) selon la revendication 9 est **caractérisé par le fait que** le support de matériau céramique poreux est fait d'oxyde d'aluminium $Al_2O_3$, ou l'alumine avec une structure en nid d'abeille.

11. L'électrolyseur (1) selon l'une quelconque des revendications précédentes est **caractérisé par le fait que** le premier générateur de champ magnétique (56) et ledit second générateur de champ magnétique (55) sont chacun composés d'un cylindre en polyéthylène réticulé qui incorpore un solénoïde en cuivre pour l'induction d'un champ magnétique sur un cylindre coaxial avec des anneaux magnétiques et diamagnétiques alternés.

**12.** L'électrolyseur (1) selon l'une quelconque des revendications précédentes, est **caractérisé par le fait que** la seconde entrée (53) comprend un diffuseur (530) fait de tubes en céramique d'alumine ($Al_2O_3$).

**13.** L'électrolyseur (1) selon l'une quelconque des revendications précédentes, est **caractérisé par le fait que** la troisième entrée (54) comprend un diffuseur (540) fait de tuyaux de polyéthylène.

**14.** L'électrolyseur (1) selon l'une quelconque des revendications précédentes est **caractérisé par le fait que** le générateur actuel comprend:

- un premier générateur de courant pour alimenter lesdits générateurs de champ magnétique (55, 56); et
- un second générateur de courant pour réguler la tension à l'extrémité de ladite anode (7a) et de ladite cathode (7c) .

**15.** L'électrolyseur (1) selon l'une quelconque des revendications précédentes est **caractérisé par le fait que** ledit générateur de courant est un générateur d'énergie photovoltaïque et éolienne (6') ou à d'autres énergies renouvelables, associées à un générateur de courant direct avec un contrôle électronique (6").

$$2\,H_2O\,(l) \rightarrow O_2\,(g) + 4\,H^+_{(aq)} + 4\,e^-$$

$$2\,H_2O\,(l) + 2\,e^- \rightarrow H_2\,(g) + 2\,OH^-_{(aq)}$$

Battery

Water + electrolyte

**Fig. 1**

**Fig. 2A**
**Sec. B-B**

Fig. 2B
Sec. B-B

Fig. 2C
Sec. A-A

Fig. 2D

Fig. 3A
Sec. B-B

Fig. 3B
Sec. B-B

Fig. 3C
Sec. A-A

Fig. 3D

Fig. 4A
Sec. B-B

Fig. 4B

## Fig. 4C
## Sec. A-A

## Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106148991 B
- WO 2008146188 A2
- US 4747925 A
- US 4107008 A
- US 2012217155 A1